# FASCICULE DE BREVET EUROPEEN

(11) **EP 4 690 119 B1**
(45) Date de publication et mention de la délivrance du brevet: **07.10.2026**
(21) Numéro de dépôt: 24713519.7
(22) Date de dépôt: 04.03.2024
(51) Int. Cl.: G06T 7/80

(54) **PROCÉDÉ ET DISPOSITIF D'ÉTALONNAGE D'UN SYSTÈME DE VISION STÉRÉOSCOPIQUE NON PARALLÈLE EMBARQUÉ DANS UN VÉHICULE**
VERFAHREN UND VORRICHTUNG ZUR KALIBRIERUNG EINES NICHTPARALLELEN STEREOSKOPISCHEN SICHTSYSTEMS IN EINEM FAHRZEUG
METHOD AND DEVICE FOR CALIBRATING A NON-PARALLEL STEREOSCOPIC VISION SYSTEM EMBEDDED IN A VEHICLE

(30) Priorité: 04.04.2023 FR 2303332
(43) Date de publication de la demande: 11.02.2026
(73) Titulaire: Stellantis Auto SAS, 78300 Poissy (FR)
(72) Inventeur: LI, Hai, 78620 L ETANG LA VILLE (FR)
(74) Mandataire: ESIP
(86) Numéro de dépôt international: PCT/FR2024/050267
(87) Numéro de publication internationale: WO 2024/209138

(56) Documents cités:
- US-A1- 2012 236 125
- US-A1- 2013 250 068
- US-B2- 10 636 121

## Description

### Domaine technique

La présente invention revendique la priorité de la demande française 2303332 déposée le 04.04.2023.

La présente invention concerne les procédés et dispositifs d'étalonnage d'un système de vision stéréoscopique embarqué dans un véhicule, par exemple dans un véhicule automobile. La présente invention concerne aussi les procédés et dispositifs de détermination d'une profondeur par système de vision stéréoscopique embarqué dans un véhicule. La présente invention concerne également un procédé et un dispositif de contrôle d'un ou plusieurs systèmes ADAS embarqués dans un véhicule à partir de la profondeur déterminée.

### Arrière-plan technologique

De nombreux véhicules modernes sont équipés de systèmes d'aide à la conduite dits ADAS (de l'anglais « Advanced Driver-Assistance System » ou en français « Système d'aide à la conduite avancé »). De tels systèmes ADAS sont des systèmes de sécurité passifs et actifs conçus pour éliminer la part d'erreur humaine dans la conduite de véhicules de tous types. Les ADAS utilisent des technologies avancées pour assister le conducteur pendant la conduite et améliorer ainsi ses performances. Les ADAS utilisent une combinaison de technologies de capteurs pour percevoir l'environnement autour d'un véhicule, puis fournissent des informations au conducteur ou agissent sur certains systèmes du véhicule.

Il existe plusieurs niveaux d'ADAS, tels que les caméras de recul et les capteurs d'angle mort, les systèmes d'alerte de franchissement de ligne, les régulateurs de vitesse adaptatifs ou encore les systèmes de stationnement automatique.

Les ADAS embarqués dans un véhicule sont alimentés par des données obtenues d'un ou plusieurs capteurs embarqués tels que, par exemple, des caméras. Ces caméras permettent notamment de détecter et de situer d'autres usagers de la route ou d'éventuels obstacles présents autour d'un véhicule afin, par exemple :
- d'adapter l'éclairage du véhicule en fonction de la présence d'autres usagers ;
- de réguler de façon automatique la vitesse du véhicule ;
- d'agir sur le système de freinage en cas de risque d'impact avec un objet.

Du bon étalonnage des caméras dépend donc la fiabilité des données issues de ces caméras et le bon fonctionnement des périphériques d'aides à la conduite utilisant ces données.

Une méthode de calibration d'un système de vision stéréoscopique est présenté dans le document « High-Precision Online Markerless Stereo Extrinsic Calibration » de Yonggen Ling and Shaojie Shen paru le 26 mars 2019, adapté à la calibration d'un système de vision stéréoscopique dont la distance séparant les caméras est limitée.

D'autres méthodes d'étalonnage demandant l'utilisation d'un échiquier sont couramment utilisées dans le domaine de la vision, un tel procédé est notamment présenté depuis de nombreuses années par Zhengyou Zhang de l'Institut national de recherche en informatique et en automatique (INRIA) et est présent dans de nombreux codes intégrés dans des librairies par exemple pour MATLAB ou OpenCV. Il est à noter que ce type de procédé nécessite l'intervention humaine. US 10 636 121 B2, US 2012/236125 A1 et US 2013/250068 A1 proposent aussi des méthodes similaires.

### Résumé de la présente invention

Un objet de la présente invention est de résoudre au moins l'un des problèmes de l'arrière-plan technologique décrit précédemment.

Un autre objet de la présente invention est d'améliorer la fiabilité des données issues de ces caméras.

Un autre objet de la présente invention est des proposer une méthode d'étalonnage ne nécessitant pas l'intervention humaine.

Un autre objet de la présente invention est d'améliorer la sécurité routière.

Selon un premier aspect, la présente invention concerne un procédé d'étalonnage d'un système de vision stéréoscopique embarqué dans un véhicule, le système de vision stéréoscopique comprenant un ensemble de caméras d'au moins deux caméras disposées de manière à acquérir chacune une image d'une scène selon un point de vue différent, les axes optiques représentatifs d'une orientation du champ de vision de chaque caméra étant orientés de façon non parallèle, le procédé étant caractérisé en ce qu'il comprend les étapes suivantes :
- réception de premières et deuxièmes données respectivement représentatives d'une première et deuxième images acquises par respectivement une première et deuxième caméras de l'ensemble de caméras à un même premier instant temporel d'acquisition ;
- détermination d'un ensemble de pixels de la deuxième image correspondant à un premier ensemble de pixels de la première image, par mise en œuvre d'une méthode de calcul par flux optique en fonction du premier ensemble de pixels de la première image et détermination d'une distance euclidienne associée à chaque pixel du premier ensemble de pixels de la première image en fonction du flux optique obtenu pour chaque pixel, un flux optique étant représentatif d'un vecteur de déplacement entre chaque pixel du premier ensemble de pixels de la première image et un pixel de l'ensemble de pixels de la deuxième image correspondant au chaque pixel du premier ensemble de pixels de la première image ;
- sélection d'un premier groupe de huit paires de pixels dans les première et deuxième images, chaque paire de pixels étant composée d'un premier pixel du premier ensemble de pixels de la première image et d'un deuxième pixel de la deuxième image associé au premier pixel
- détermination d'une matrice fondamentale en fonction du premier groupe par minimisation d'une erreur épipolaire ;
- détermination de disparités associées audit premier ensemble de pixels de la première image en fonction de ladite matrice fondamentale et à partir dudit ensemble de pixels de la deuxième image et dudit premier ensemble de pixels de la première image ;
- réception de troisièmes données représentatives d'une troisième image acquise par la première caméra à un deuxième instant temporel d'acquisition antérieur au premier instant temporel d'acquisition de la première image ;
- calcul de profondeurs associées à un deuxième ensemble de pixels de la première image via un système de vision monoscopique à partir d'un ensemble de pixels de la troisième image correspondants au deuxième ensemble de pixels de la première image et dudit deuxième ensemble de pixels de la première image,
   le système de vision monoscopique étant formé de la première caméra ;
- détermination d'une distance de base entre la première caméra et la deuxième caméra en fonction desdites profondeurs associées au deuxième ensemble de pixels de la première image, des disparités associées à chaque pixel du premier ensemble de pixels de la première image et d'une distance focale associée à la première caméra ; et
- étalonnage du système de vision stéréoscopique en fonction de la matrice fondamentale et de la distance de base.

L'étalonnage du système de vision stéréoscopique est donc réalisé, l'étalonnage consistant à déterminer l'ensemble des paramètres extrinsèques du système de vision stéréoscopique.

Selon une variante du procédé, la première image est découpée en huit blocs, chaque bloc comprenant au moins un premier pixel du premier groupe.

Ce découpage de la première image permet de prendre en considération l'ensemble de la première image et évite ainsi de considérer des erreurs localisées.

Selon une troisième variante de procédé, les premiers pixels du premier groupe sont sélectionnés dans le premier ensemble de pixels de la première image en fonction d'une distance euclidienne associée à chaque premier pixel.

Plus la distance euclidienne des pixels associés est grande, meilleure sera la précision des calculs. La fiabilité du procédé est ainsi garantie.

Selon une autre variante, le procédé comprend en outre les étapes de :
- détermination d'une première matrice intermédiaire en fonction du premier groupe par minimisation d'une erreur épipolaire ;
- sélection d'un deuxième groupe de huit paires de pixels distinct du premier groupe de huit paires de pixels;
- détermination d'une deuxième matrice intermédiaire en fonction du deuxième groupe par minimisation d'une erreur épipolaire ;

- détermination d'une première matrice moyenne en fonction d'un ensemble de matrices intermédiaires comprenant les première et deuxième matrices intermédiaires, chaque coefficient de la première matrice moyenne étant défini comme une moyenne des coefficients de chaque matrice intermédiaire de l'ensemble de matrices intermédiaires, chacune des matrices intermédiaires ayant été ramenée préalablement à une matrice de norme égale à 1 ;
- comparaison d'une valeur seuil déterminée à un ensemble de différences entre des coefficients de la première matrice moyenne et des coefficients de la première matrice intermédiaire ;
- si chaque différence est inférieure à la valeur seuil alors la matrice fondamentale est définie comme étant égale à la première matrice moyenne ; et
- si au moins une différence est supérieure à la valeur seuil alors le procédé comprend les étapes suivantes, avec un ensemble de groupes comprenant les premier et deuxième groupes :
- sélection (A) d'un nouveau groupe de 8 paires de pixels distinct de chaque groupe de l'ensemble de groupes ;
- détermination (B) d'une nouvelle matrice intermédiaire en fonction du nouveau groupe par minimisation d'une erreur épipolaire ;
- ajout (C) de la nouvelle matrice intermédiaire à l'ensemble de matrices intermédiaires ;
- détermination (D) d'une nouvelle matrice moyenne en fonction de l'ensemble de matrices intermédiaires, chaque coefficient de la première matrice moyenne étant défini comme une moyenne des coefficients de chaque matrice intermédiaire de l'ensemble de matrices intermédiaires, chacune des matrices intermédiaires ayant été ramenée préalablement à une matrice de norme égale à 1 ;
- comparaison (E) de la valeur seuil déterminée à un ensemble de différences entre des coefficients de la nouvelle matrice moyenne et des coefficients de la première matrice moyenne :
- si chaque différence est inférieure à la valeur seuil alors la matrice fondamentale est définie comme la nouvelle matrice moyenne ; et
- si au moins une différence est supérieure à la valeur seuil alors le nouveau groupe de huit paires de pixels est ajouté dans l'ensemble de groupes et les étapes B à E sont réitérées en considérant la nouvelle matrice moyenne comme remplaçant la première matrice moyenne.

L'itération de ces étapes permet de garantir la stabilisation du calcul de la matrice fondamentale.

Selon encore une variante de procédé, les profondeurs sont calculées par un réseau de neurones convolutif à apprentissage est automatique.

Selon encore une autre variante, le procédé comprend en outre une étape de détermination d'un premier masque de visibilité associé à la première image et représentatif d'un ensemble de pixels de la première image ayant au moins un pixel correspondant dans la deuxième image, le premier masque de visibilité étant déterminé par la méthode de calcul par flux optique, la sélection du premier groupe étant en outre fonction du premier masque de visibilité.

L'utilisation du premier masque de visibilité pour la sélection des huit paires de pixels permet ainsi d'exclure des valeurs aberrantes de flux optique.

Selon une autre variante, le procédé comprend en outre une étape de détermination d'un deuxième masque de visibilité associé à la première image et représentatif d'un ensemble de pixels de la première image ayant au moins un pixel correspondant dans la troisième image, le deuxième masque de visibilité étant déterminé par la méthode de calcul par flux optique, le calcul de la distance de base étant en outre fonction du deuxième masque de visibilité.

L'utilisation du deuxième masque de visibilité pour le calcul de ladite distance de base permet ainsi d'exclure des valeurs aberrantes de flux optique.

Selon une variante supplémentaire, le procédé comprend en outre une étape de détermination d'un masque d'objets dynamiques associé à la première image et représentatif d'un ensemble de pixels de la première image associé à au moins un objet en mouvement dans la scène, le calcul de ladite distance de base étant en outre fonction dudit masque d'objets dynamiques.

L'utilisation du masque d'objets dynamiques lors de la détermination de la distance de base permet d'éviter la prise en compte de pixels liés à des objets en mouvement dans la scène.

Selon un deuxième aspect, la présente invention concerne un dispositif d'étalonnage d'un système de vision stéréoscopique embarqué dans un véhicule, le dispositif comprenant une mémoire associée à un processeur configuré pour la mise en œuvre des étapes du procédé selon le premier aspect de la présente invention.

Selon un troisième aspect, la présente invention concerne un véhicule, par exemple de type automobile, comprenant un dispositif tel que décrit ci-dessus selon le deuxième aspect de la présente invention.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

D'autres caractéristiques et avantages de la présente invention ressortiront de la description des exemples de réalisation particuliers et non limitatifs de la présente invention ci-après, en référence aux figures 1 à 4 annexées, sur lesquelles :
[Fig. 1] illustre schématiquement un système de vision stéréoscopique non parallèle équipant un véhicule, selon un exemple de réalisation particulier et non limitatif de la présente invention ;
[Fig. 2] illustre schématiquement un dispositif configuré pour l'étalonnage d'un système de vision stéréoscopique non parallèle embarqué dans le véhicule de la figure 1, selon un exemple de réalisation particulier et non limitatif de la présente invention ;
[Fig. 3] illustre un organigramme des différentes opérations d'un processus d'étalonnage d'un système de vision stéréoscopique non parallèle embarqué dans le véhicule de la figure 1, selon un exemple de réalisation particulier et non limitatif de la présente invention ;
[Fig. 4] illustre un organigramme des différentes étapes d'un procédé d'étalonnage d'un système de vision stéréoscopique non parallèle embarqué dans le véhicule de la figure 1, selon un exemple de réalisation particulier et non limitatif de la présente invention.

### Description des exemples de réalisation

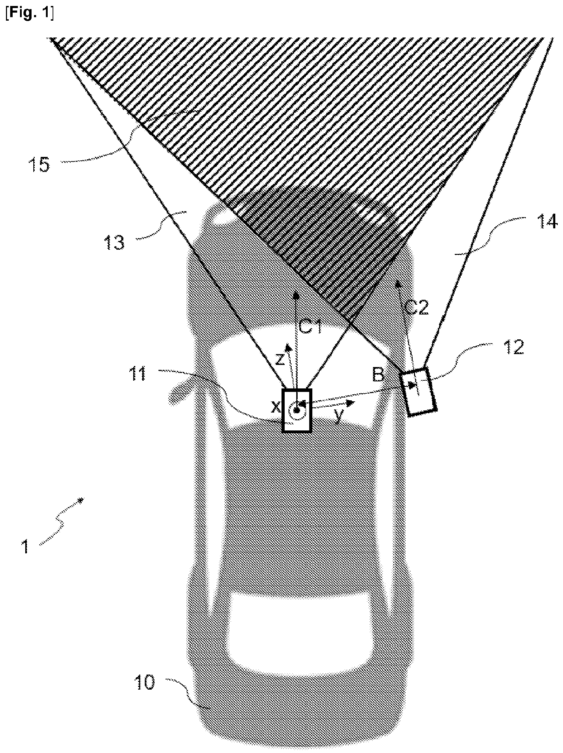

Un procédé et un dispositif d'étalonnage d'un système de vision stéréoscopique, par la suite appelé « système stéréo », embarqué dans un véhicule vont maintenant être décrits dans ce qui va suivre en référence conjointement aux figures 1 à 4. Des mêmes éléments sont identifiés avec des mêmes signes de référence tout au long de la description qui va suivre.

Selon un exemple particulier et non limitatif de réalisation de la présente invention, un procédé d'étalonnage d'un système de vision stéréoscopique embarqué dans un véhicule, le système de vision stéréoscopique comprenant un ensemble de caméras d'au moins deux caméras disposées de manière à acquérir chacune une image d'une scène selon un point de vue différent, les axes optiques représentatifs d'une orientation du champ de vision de chaque caméra étant orientés de façon non parallèle, le procédé étant caractérisé en ce qu'il comprend les étapes suivantes.

Des premières et deuxièmes données respectivement représentatives d'une première et deuxième images acquises par respectivement une première et deuxième caméras de l'ensemble de caméras sont reçues à un même premier instant temporel d'acquisition, un ensemble de pixels de la deuxième image correspondant à un premier ensemble de pixels de la première image est déterminé, par mise en œuvre d'une méthode de calcul par flux optique et une distance euclidienne associée à chaque pixel du premier ensemble de pixels de la première image est déterminée en fonction du flux optique obtenu pour chaque pixel. Un premier groupe de huit paires de pixels est sélectionné dans les première et deuxième image, chaque paire de pixels étant composée d'un premier pixel du premier ensemble de pixels de la première image et d'un deuxième pixel de la deuxième image associé au premier pixel et une matrice fondamentale est déterminée en fonction du premier groupe par minimisation d'une erreur épipolaire. Des disparités associées au premier ensemble de pixels de la première image sont alors déterminées en fonction de la matrice fondamentale et à partir de l'ensemble de pixels de la deuxième image et du premier ensemble de pixels de la première image ;

Des troisièmes données représentatives d'une troisième image acquise par la première caméra à un deuxième instant temporel d'acquisition antérieur au premier instant temporel d'acquisition de la première image sont également reçues, des profondeurs associées à un deuxième ensemble de pixels de la première image sont calculées via un système de vision monoscopique à partir d'un ensemble de pixels de la troisième image correspondants au deuxième ensemble de pixels de la première image et du deuxième ensemble de pixels de la première image, le système de vision monoscopique étant formé de la première caméra et une distance de base entre la première caméra et la deuxième caméra est déterminée en fonction des profondeurs associées au deuxième ensemble de pixels de la première image, des disparités associées à chaque pixel du premier ensemble de pixels de la première image et d'une distance focale associée à ladite première caméra.

Le système de vision stéréoscopique est alors étalonné en fonction de la matrice fondamentale et de la distance de base.

La figure 1 illustre schématiquement un système de vision stéréoscopique non parallèle équipant un véhicule 10 évoluant dans un environnement 1, selon un exemple de réalisation particulier et non limitatif de la présente invention.

Un tel environnement 1 correspond, par exemple, à un environnement routier formé d'un réseau de routes accessibles pour le véhicule 10.

Dans cet exemple, le véhicule 10 correspond à un véhicule à moteur thermique, à moteur(s) électrique(s) ou encore un véhicule hybride avec un moteur thermique et un ou plusieurs moteurs électriques. Le véhicule 10 correspond ainsi, par exemple, à un véhicule terrestre tel une automobile, un camion, un car, une moto. Enfin, le véhicule 10 correspond à un véhicule autonome ou non, c'est-à-dire un véhicule circulant selon un niveau d'autonomie déterminé ou sous la supervision totale du conducteur.

Le véhicule 10 comprend avantageusement plusieurs caméras 11, 12 embarquées, chacune configurée pour acquérir des images d'une scène dans l'environnement du véhicule 10. Cet ensemble de caméras 11, 12 forme le système stéréo. Deux caméras 11 et 12 sont illustrées sur la figure 1. L'invention ne se limite cependant pas à un système stéréo comprenant deux caméras mais s'étend à tout système stéréo comprenant 2 ou plus caméras, par exemple 2, 3, 4 ou 5 caméras.

Les deux caméras 11, 12 disposent de paramètres intrinsèques connus. Ces paramètres se composent notamment de :
- la distance focale f1 de la première caméra 11 ;
- la distance focale f2 de la deuxième caméra 12 ;
- les distorsions qui sont dues aux imperfections du système optique de chaque caméra ;
- la direction C1 de l'axe optique de la première caméra 11 ;
- la direction C2 de l'axe optique de la deuxième caméra 12 ; et
- les résolutions respectives des caméras 11, 12.

Les paramètres intrinsèques caractérisent la transformation qui associe, pour un point image, les coordonnées caméra aux coordonnées pixel, dans chaque caméra. Ces paramètres ne changent pas si l'on déplace la caméra.

Les distorsions, qui sont dues aux imperfections du système optique telles que des défauts de forme et de positionnement des lentilles des caméras, vont dévier les faisceaux lumineux et donc induire un écart de positionnement pour le point projeté par rapport à un modèle idéal. Il est possible alors de compléter le modèle de caméra en y introduisant les trois distorsions qui génèrent le plus d'effets, à savoir les distorsions radiales, de décentrage et prismatiques, induites par des défauts de courbure, de parallélisme des lentilles et de coaxialité des axes optiques. Dans cet exemple, les caméras sont supposées parfaites, c'est-à-dire que les distorsions ne sont pas prises en compte ou que leur correction est traitée au moment de l'acquisition d'une image.

Ces deux caméras 11, 12 sont disposées de manière à acquérir chacune une image d'une scène selon un point de vue différent, le premier point de vue est par exemple localisé sur ou dans le rétroviseur gauche du véhicule 10 ou en haut du pare-brise du véhicule 10, le deuxième point de vue est par exemple localisé sur ou dans le rétroviseur droit du véhicule 10 ou en haut du pare-brise du véhicule 10. Dans le cas où les deux caméras sont situées en haut du pare-brise du véhicule, celles-ci sont alors placées à une certaine distance. Dans cet exemple, la première caméra 11 est située en haut du pare-brise du véhicule 10, la deuxième caméra 12 est située dans le rétroviseur droit du véhicule 10.

Un premier repère est associé à la première caméra 11 :
- la direction de l'axe y est définie par la position de la deuxième caméra 12, de manière à placer la deuxième caméra 12 sur l'axe y de la première caméra 11. La distance B séparant les deux caméras 11, 12 est appelée distance de base (en anglais « baseline » ou en français « base de référence ») et la direction séparant les deux caméras 11, 12 est celle de l'axe y ;
- la direction de l'axe x est définie orthogonale à celle de l'axe y et orthogonale à celle de l'axe optique C1 de la première caméra 11 ;
- la direction de l'axe z est définie orthogonale aux directions des axes x et y.

Les trois axes x, y et z forment ainsi un repère orthonormé.

Les paramètres extrinsèques liés à la position des caméras 11, 12 sont les paramètres suivants :
- 3 translations dans les directions x, y et z : Tx, Ty et Tz constituant le vecteur translation T ; et
- 3 rotations autour des axes x, y et z : Rx, Ry et Rz, constituant la matrice de rotation R.

Déterminer les paramètres extrinsèques constitue le problème de la calibration d'un système de vision stéréoscopique.

Une contrainte principale du système de vision stéréoscopique utilisé dans l'automobile est, par exemple, la grande distance entre les deux caméras. En effet, pour pouvoir couvrir une plage de mesure de 200 mètres, le « baseline » doit atteindre 60 cm pour les caméras couramment utilisées dans ce domaine.

Les deux caméras 11, 12 font l'acquisition d'images d'une scène se situant devant le véhicule 10, la première caméra couvrant seule un premier champ d'acquisition 13, la deuxième caméra couvrant seule un deuxième champ d'acquisition 14 et les deux caméras 11, 12 couvrant toutes deux un troisième champ d'acquisition 15. Les premier et troisième champs d'acquisition 13, 15 permettent ainsi une vision monoscopique de la scène par la première caméra 11, les deuxième et troisième champs d'acquisition 14, 15 permettent une vision monoscopique de la scène par la deuxième caméra 12 et le troisième champ d'acquisition 15 permet une vision stéréoscopique de la scène par le système de vision stéréoscopique composé des deux caméras 11, 12.

Les directions C1, C2 des axes optiques représentatifs d'une orientation du champ de vision de chaque caméra sont orientées non parallèlement de manière à obtenir le troisième champ d'acquisition 15 de l'environnement 1 le plus large possible.

Il est évident qu'il est possible d'utiliser un tel système de vision stéréoscopique pour prendre des images de scènes situées sur les côtés ou derrière le véhicule 10 en l'équipant de caméras placées et orientées différemment.

Les images acquises par les caméras 11, 12 à un instant temporel d'acquisition t1 donné se présentent sous la forme de données représentant des pixels caractérisés par :
- des coordonnées dans chaque image ; et
- des données relatives aux couleurs et luminosité des objets de la scène observée sous forme par exemple de coordonnées colorimétriques RGB (de l'anglais « Red Green Blue », en français « Rouge Vert Bleu ») ou TSL (Ton, Saturation, Luminosité).

Les images acquises par les caméras 11, 12 représentent des vues d'une même scène prises à des points de vue différents, les position des caméras étant distinctes. Sur cette scène se trouvent par exemple :
- des bâtiments ;
- des infrastructures routières ;
- d'autres usagers immobiles, par exemple un véhicule stationné ; et/ou
- d'autres usagers mobiles, par exemple un autre véhicule, un cycliste ou un piéton en mouvement.

Ces images sont envoyées à un calculateur d'un dispositif équipant le véhicule 10 ou stockées dans une mémoire d'un dispositif accessible à un calculateur d'un dispositif équipant le véhicule 10.

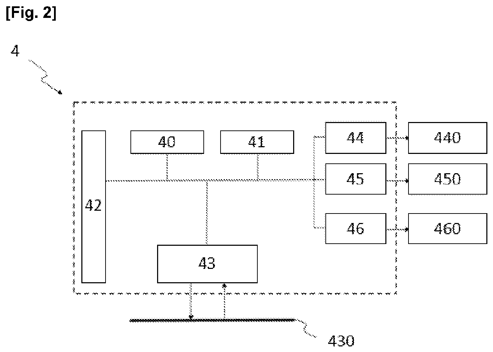

La figure 2 illustre schématiquement un dispositif 4 configuré l'étalonnage d'un système de vision stéréoscopique non parallèle embarqué dans un véhicule 10, selon un exemple de réalisation particulier et non limitatif de la présente invention. Le dispositif 4 correspond par exemple à un dispositif embarqué dans le premier véhicule 10, par exemple un calculateur.

Le dispositif 4 est par exemple configuré pour la mise en œuvre des opérations et/ou étapes décrites en regard des figures 1, 3 et 4. Des exemples d'un tel dispositif 4 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 4, individuellement ou en combinaison, peuvent être intégrés dans un unique circuit intégré, dans plusieurs circuits intégrés, et/ou dans des composants discrets. Le dispositif 4 peut être réalisé sous la forme de circuits électroniques ou de modules logiciels (ou informatiques) ou encore d'une combinaison de circuits électroniques et de modules logiciels.

Le dispositif 4 comprend un (ou plusieurs) processeur(s) 40 configurés pour exécuter des instructions pour la réalisation des étapes du procédé et/ou pour l'exécution des instructions du ou des logiciels embarqués dans le dispositif 4. Le processeur 40 peut inclure de la mémoire intégrée, une interface d'entrée/sortie, et différents circuits connus de l'homme du métier. Le dispositif 4 comprend en outre au moins une mémoire 41 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 41.

Selon différents exemples de réalisation particuliers et non limitatifs, le dispositif 4 est couplé en communication avec d'autres dispositifs ou systèmes similaires (par exemple d'autres calculateurs) et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 4 comprend un bloc 42 d'éléments d'interface pour communiquer avec des dispositifs externes. Les éléments d'interface du bloc 42 comprennent une ou plusieurs des interfaces suivantes :
- interface radiofréquence RF, par exemple de type Wi-Fi^{®} (selon IEEE 802.11), par exemple dans les bandes de fréquence à 2,4 ou 5 GHz, ou de type Bluetooth^{®} (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
   interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Selon un autre exemple de réalisation particulier et non limitatif, le dispositif 4 comprend une interface de communication 43 qui permet d'établir une communication avec d'autres dispositifs (tels que d'autres calculateurs du système embarqué) via un canal de communication 430. L'interface de communication 43 correspond par exemple à un transmetteur configuré pour transmettre et recevoir des informations et/ou des données via le canal de communication 430. L'interface de communication 43 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 4 peut fournir des signaux de sortie à un ou plusieurs dispositifs externes, tels qu'un écran d'affichage 440, tactile ou non, un ou des haut-parleurs 450 et/ou d'autres périphériques 460 (système de projection) via respectivement les interfaces de sortie 44, 45, 46. Selon une variante, l'un ou l'autre des dispositifs externes est intégré au dispositif 4.

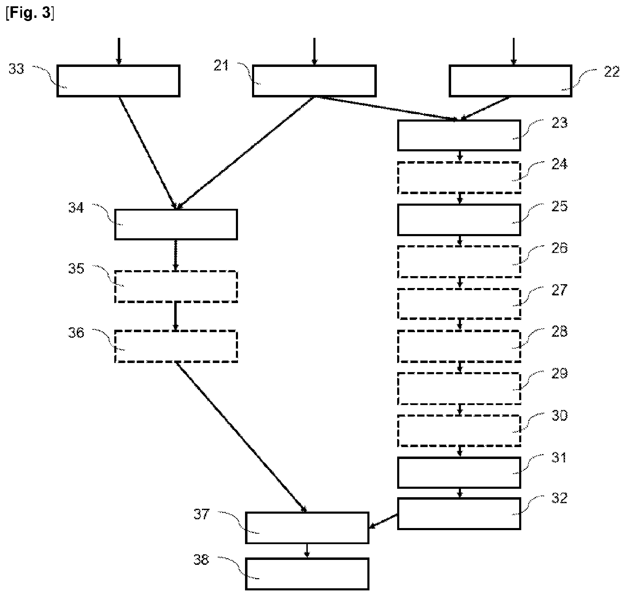

La figure 3 illustre un organigramme des différentes opérations d'un processus d'étalonnage d'un système de vision stéréoscopique non parallèle embarqué dans le véhicule de la figure 1, selon un exemple de réalisation particulier et non limitatif de la présente invention.

Le processus est par exemple mis en œuvre par un ou plusieurs processeurs d'un ou plusieurs calculateurs embarqués dans le véhicule 10, par exemple par un calculateur contrôlant le système stéréo.

Dans une première opération 21, le calculateur reçoit des premières données représentatives d'une première image acquise par une première caméra 11 de l'ensemble de caméras à un premier instant temporel d'acquisition t1.

Dans une deuxième opération 22, le calculateur reçoit des deuxièmes données représentatives d'une deuxième image acquise par une deuxième caméra 12 de l'ensemble de caméras au même premier instant temporel d'acquisition t1.

Les deux images reçues correspondent à deux vues d'une même scène se déroulant aux alentours du véhicule 10 à même premier instant temporel d'acquisition t1 donné.

L'opération suivante 23 d'appariement stéréo se fait par mise en œuvre d'une méthode de calcul par flux optique (en anglais « optical flow ») en fonction de l'ensemble de premiers pixels. Une telle méthode est notamment décrite dans « UnOS: Unified Unsupervised Optical-flow and Stereo-depth Estimation by Watching Videos » de Yang Wang, Peng Wang, Zhenheng Yang, Chenxu Luo, Yi Yang et Wei Xu de juin 2019.

La méthode de calcul par flux optique est réalisée, par exemple, par un réseau de neurones convolutif (en anglais « Convolutional Neural Networks », CNN). Ce type d'outil est couramment utilisé dans le cadre du traitement d'images.

Un ensemble de pixels de la deuxième image correspondant à un premier ensemble de pixels de la première image est déterminé, par mise en œuvre d'une méthode de calcul par flux optique en fonction du premier ensemble de pixels de la première image.

Une méthode d'extraction des caractéristiques est connue de l'homme du métier, comme la méthode SIFT (de l'anglais « Scale Invariant Feature Transform », en français « Transformation de caractéristique invariante à l'échelle ») ou la méthode « Corner Detection » (en français « Détection d'Angle »). Ces méthodes ne sont ici pas la plus adaptée, l'utilisation d'un réseau de neurones convolutifs est alors favorisée.

La donnée de sortie de cette opération 23 est un flux optique représentatif d'un vecteur de déplacement entre chaque premier pixel de l'ensemble de premiers pixels de la première image et le deuxième pixel correspondant à chaque premier pixel dans la deuxième image.

Une distance euclidienne associée à chaque pixel du premier ensemble de pixels de la première image est également déterminé en fonction du flux optique obtenu pour chaque pixel.

Il est possible qu'un pixel de la première image ne trouve pas de pixel correspondant dans la deuxième image. Ce phénomène s'explique par le fait que des zones de la première image peuvent être occluses dans la deuxième image. En effet, la différence de point de vue des deux caméras 11, 12 ne permet pas aux deux caméras 11, 12 de voir tous les éléments de la scène. Un objet présent dans la scène peut masquer un second objet de la scène, le second objet étant visible du point de vue de la première caméra 11 mais étant masqué par le premier objet du point de vue de la deuxième caméra 12.

Une opération de détermination 24 des zones occluses de la première image consiste à déterminer un premier masque de visibilité associé à la première image et représentatif d'un ensemble de pixels de la première image ayant au moins un pixel correspondant dans la deuxième image, , le premier masque de visibilité étant déterminé par une méthode de calcul par flux optique (en anglais « optical flow »). Une telle méthode est notamment décrite dans « UnOS: Unified Unsupervised Optical-flow and Stereo-depth Estimation by Watching Videos » de Yang Wang, Peng Wang, Zhenheng Yang, Chenxu Luo, Yi Yang et Wei Xu de juin 2019.

La définition d'un masque de visibilité est connue de l'homme du métier. Elle est, par exemple, décrite dans « Occlusion Aware Unsupervised Learning of Optical Flow », de Yang Wang, Yi Yang, Zhenheng Yang, Liang Zhao, Peng Wang et Wei Xu paru le 4 avril 2018.

La détermination du masque de visibilité permet par la suite de ne pas utiliser les pixels de la première image qui n'ont pas de correspondance dans la deuxième image lors des opérations suivantes d'exploitation de ces images.

Le but des opérations suivantes est de déterminer les paramètres extrinsèques du système stéréo. Ceux-ci correspondent aux neuf coefficients de la matrice essentielle du système stéréo. Il convient donc, pour déterminer ces neuf coefficients, de résoudre neuf équations.

A ce stade, il n'est pas possible d'obtenir la valeur de la distance de base séparant les première et deuxième caméras, cette distance de base appelée « baseline » sera définie dans des opérations ultérieures.

La non-connaissance de la baseline revient à ne pas pouvoir déterminer l'échelle des mesures prises à partir des première et deuxième images.

Cette non-connaissance de l'échelle revient à définir une matrice fondamentale à un coefficient près. Il convient de déterminer huit valeurs de la matrice fondamentale pour connaître les paramètres extrinsèques du système stéréo hors « baseline ». Il faut donc obtenir huit équations à résoudre.

Le dernier coefficient de la matrice fondamentale sera, quant à lui, obtenu en définissant la norme de la matrice fondamentale égale à un, le système étant défini à un facteur d'échelle près (en anglais « up to scale »).

Pour obtenir les huit équations, dans une opération 25, un premier groupe de huit paires de pixels est sélectionné dans les première et deuxième images. Chaque paire de pixels est composée d'un premier pixel du premier ensemble de pixels de la première image et d'un deuxième pixel de la deuxième image associé au premier pixel lors de l'opération d'appariement précédente.

Afin d'augmenter la précision des calculs, il est préférable de sélectionner les huit premiers pixels dans des zones distinctes de la première image. L'image est, par exemple, découpée en huit blocs, de manière à déterminer chaque premier pixel dans un des blocs.

Chaque premier pixel est déterminé comme étant celui du bloc dont la distance euclidienne calculée précédemment est la plus grande parmi les pixels de la zone dans laquelle il se trouve et ayant au moins un deuxième pixel correspondant dans la deuxième image. En d'autres termes, le premier masque de visibilité est utilisé en tant que filtre afin de ne sélectionner que des pixels pertinents.

La plus grande distance euclidienne est privilégiée car c'est celle qui permet d'obtenir la plus grande précision dans la résolution des prochaines équations, on augmente ainsi considérablement la fiabilité des paramètres extrinsèques obtenus à partir de l'analyse des première et deuxième images.

Une première matrice intermédiaire est déterminée en fonction du premier groupe par minimisation d'une erreur épipolaire définie par :

[Math 2] ${min}_{F} {\left‖{\left({p}_{i}^{′}\right)}^{T}{Fp}_{i}\right‖}^{2} avec \left‖F\right‖ = 1$

Avec :
- ${p}_{i}^{′}$ et *pᵢ* sont des pixels dans respectivement la deuxième et première image ; et
- F la matrice intermédiaire 3x3 avec ||*F*|| = 1.

Suivant un premier mode de réalisation, dans une opération 31, une matrice fondamentale du système stéréo est définie égale à la première matrice intermédiaire.

Suivant un deuxième mode de réalisation, de nouvelles paires de pixels sont à nouveau sélectionnées pour réaliser d'autres calculs de matrices intermédiaires et ensuite utilisées pour affiner le calcul d'une matrice fondamentale du système stéréo.

Ainsi, dans une opération 27, un deuxième groupe de huit paires de pixels distinct du premier groupe est sélectionné. Le choix des premiers pixels de ce deuxième groupe se fait suivant la même méthode que celle décrite précédemment en excluant les premiers pixels déjà sélectionnés.

Dans une opération 28, d'une deuxième matrice intermédiaire est déterminée en fonction du deuxième groupe par minimisation d'une erreur épipolaire telle que décrite précédemment.

Dans une opération 29, d'une première matrice moyenne est déterminée en fonction de l'ensemble de matrices intermédiaires précédemment déterminées. Chaque coefficient de la première matrice moyenne est défini comme une moyenne des coefficients de chaque matrice intermédiaire de l'ensemble de matrices intermédiaires, chacune des matrices intermédiaires ayant été ramenée préalablement à une matrice de norme égale à 1.

Dans une opération 30, une valeur seuil déterminée est comparée à un ensemble de différences entre des coefficients de la première matrice moyenne et des coefficients de la première matrice intermédiaire. Cette valeur seuil définit la limite de convergence des calculs de coefficients d'une matrice fondamentale.

Si chaque différence est inférieure à la valeur seuil, autrement dit, si la première matrice moyenne est proche de la première matrice intermédiaire, alors la matrice fondamentale est définie dans une opération 31 comme étant égale à la première matrice moyenne.

A l'inverse, si au moins une différence est supérieure à la valeur seuil alors le procédé comprend les étapes suivantes, avec un ensemble de groupes comprenant lesdits premier et deuxième groupes :
- sélection (A) d'un nouveau groupe de 8 paires de pixels distinct de chaque groupe de l'ensemble de groupes ;
- détermination (B) d'une nouvelle matrice intermédiaire en fonction du nouveau groupe par minimisation d'une erreur épipolaire ;
- ajout (C) de la nouvelle matrice intermédiaire à l'ensemble de matrices intermédiaires ;
- détermination (D) d'une nouvelle matrice moyenne en fonction de l'ensemble de matrices intermédiaires, chaque coefficient de la première matrice moyenne étant défini comme une moyenne des coefficients de chaque matrice intermédiaire de l'ensemble de matrices intermédiaires, chacune des matrices intermédiaires ayant été ramenée préalablement à une matrice de norme égale à 1 ;
- comparaison (E) de la valeur seuil déterminée à un ensemble de différences entre des coefficients de la nouvelle matrice moyenne et des coefficients de la première matrice moyenne :
- si chaque différence est inférieure à la valeur seuil alors la matrice fondamentale est définie, dans une opération 31, comme la nouvelle matrice moyenne ; et
- si au moins une différence est supérieure à la valeur seuil alors le nouveau groupe de huit paires de pixels est ajouté dans l'ensemble de groupes et les étapes B à E sont réitérées en considérant la nouvelle matrice moyenne comme remplaçant la première matrice moyenne.

Ainsi, dans ce deuxième mode de réalisation, une matrice fondamentale du système stéréo est définie après convergence des calculs de ses coefficients. Cette matrice fondamentale est ainsi définie à partir de nombreux groupes de huit paires de pixels et est donc représentative d'une matrice fondamentale du système stéréo valable pour l'ensemble des pixels de la première image.

A ce stade, la totalité des paramètres extrinsèques du système stéréo peut être déterminée à l'exception de la distance de base appelée « baseline ». Cette distance est souvent connue du système stéréo dès sa calibration et ne change quasiment jamais étant liée à une structure sur laquelle les deux caméras 11 et 12 sont fixées. Néanmoins, cette distance peut être modifiée à la suite d'un choc qu'aurait subi le véhicule par exemple.

La connaissance d'une matrice fondamentale permet désormais d'utiliser les données issues du système stéréo en les considérant comme valides. Les première et deuxième images sont par exemple être rectifiées, la connaissance des positions relatives des caméras étant acquise. Seul le facteur d'échelle est incertain à ce stade.

Dans une opération 32, des disparités associées au premier ensemble de pixels de la première image sont déterminées en fonction de la matrice fondamentale et à partir de l'ensemble de pixels de la deuxième image et du premier ensemble de pixels de la première image.

Afin de connaître le facteur d'échelle du système stéréo et ainsi garantir des prédictions de profondeur par ce dernier, la distance de base est déterminée avec l'aide d'un système de vision monoscopique défini par l'une des caméras en mouvement, ici la première caméra 11.

Dans une opération 33, le calculateur reçoit des troisièmes données représentatives d'une troisième image acquise par la première caméra 11 à un deuxième instant temporel d'acquisition t2.

Cet instant temporel d'acquisition t2 est antérieur au premier instant temporel d'acquisition t1.

Les troisièmes données ont par exemple, été sauvegardées dans une mémoire associée au calculateur ou dans une mémoire d'un dispositif embarqué dans le véhicule 10 et accessible au calculateur mettant en œuvre le processus.

Si le véhicule 10 est en mouvement, alors la troisième image correspond à une troisième vue de la scène prise depuis un troisième point de vue, celui de la première caméra 11 à sa position au deuxième instant temporel d'acquisition t2.

Cette position de la première caméra 11 au deuxième instant temporel d'acquisition t2 est définie par le déplacement du véhicule 10 entre les instants temporels d'acquisition t2 et t1. Ce déplacement est donc lié à la vitesse du véhicule 10 pendant la durée séparant les premier et deuxième instants temporels d'acquisition t1 et t2.

La première caméra dans les deux positions définies aux premier et deuxième instants temporels d'acquisition t1 et t2 forme un système de vision monoscopique. Les paramètres intrinsèques de ce système restent les mêmes que ceux définis précédemment liés à la première caméra 11 pour le système stéréo. Les paramètres extrinsèques de ce système de vision monoscopique sont les paramètres suivants :
- 3 translations dans les directions x, y et z : Tx', Ty' et Tz' constituant le vecteur translation T' ; et
- 3 rotations autour des axes x, y et z : Rx', Ry' et Rz', constituant la matrice de rotation R'.

Les paramètres extrinsèques du système de vision monoscopique sont, par exemple, déterminés par un calculateur associé à ce même système de vision monoscopique. La détermination des paramètres extrinsèques du système de vision monoscopique est connue de l'homme du métier et présentée, par exemple, dans le document Unsupervised Learning of Depth and Ego-Motion from Video de Tinghui Zhou, Matthew Brown, Noah Snavely et David G. Lowe paru le 1er août 2017.

Dans une opération 34, des profondeurs associées à un deuxième ensemble de pixels de la première image sont calculées via le système de vision monoscopique à partir d'un ensemble de pixels de la troisième image correspondants au deuxième ensemble de pixels de la première image et du deuxième ensemble de pixels de la première image, une telle opération 34 est également décrite dans le document précédemment cité.

Le fait de s'affranchir de l'obtention des paramètres extrinsèques via des capteurs supplémentaires permet une intégration plus aisée du dispositif de détermination d'une profondeur par système de vision monoscopique dans un véhicule 10.

Il est possible qu'un pixel de la première image ne trouve pas de pixel correspondant dans la troisième image. Ce phénomène s'explique par le fait que des zones de la première image peuvent être occluses dans la troisième image. En effet, la différence de point de vue de la première caméra 11 aux instants temporels d'acquisition t1, t2 ne permet pas à la première caméra 11 de voir tous les éléments de la scène. Un objet présent dans la scène, peut masquer un second objet de la scène, le second objet étant visible du point de vue de la première caméra 11 à l'instant temporel d'acquisition t1 mais étant masqué par un obstacle du point de vue de la première caméra 11 à l'instant temporel d'acquisition t2.

Une opération de détermination 35 des zones occluses de la première image consiste à déterminer un deuxième masque de visibilité associé à la première image et représentatif d'un quatrième ensemble de pixels de la première image ayant au moins un pixel correspondant dans la troisième image, le deuxième masque de visibilité étant déterminé par la méthode de calcul par flux optique précédemment exposée.

La détermination du masque de visibilité pour un pixel permet de ne pas prendre en compte d'éventuelles valeurs aberrantes de flux optique pour des pixels de la première image qui n'ont pas de correspondance dans la troisième image. L'utilisation du masque de visibilité dans les opérations suivantes est donc privilégiée.

Une opération de détermination 36 des zones statiques de la première image consiste à déterminer un masque d'objets dynamiques associé à la première image et représentatif d'un cinquième ensemble de pixels de la première image associés à un objet en mouvement dans la scène. Ce masque d'objets dynamiques peut être déterminé par la méthode de calcul par flux optique.

Un tel masque d'objets dynamiques défini précédemment est connu de l'homme du métier et est présenté dans le document « Every Pixel Counts ++: Joint Learning of Geometry and Motion with 3D Holistic Understanding » de Chenxu Luo, Zhenheng Yang, Peng Wang, Yang Wang, Wei Xu, Ram Nevatia et Alan Yuille du 11 juillet 2019.

En effet, les systèmes de vision monoscopique peuvent être capables de déterminer la profondeur d'un objet en mouvement dans une scène selon les données utilisées pour leur apprentissage, mais la précision de cette mesure n'est cependant pas garantie. Afin de ne pas prendre en compte des valeurs non pertinentes, il convient de ne prendre en compte que les pixels de la première image associés à des objets statiques ou immobiles dans la scène. L'utilisation du masque des objets dynamiques, comme précédemment l'utilisation du deuxième masque de visibilité, dans les opérations suivantes est donc privilégiée.

Les pixels pertinents à considérer pour calculer la distance de base sont ceux qui ont au moins un pixel correspondant dans la deuxième image, au moins un pixel correspondant dans la troisième image et qui ne sont pas associés à des objets en mouvement. En d'autres termes, ce calcul se fait à l'aide des premier et deuxième masques de visibilité ainsi qu'avec le masque des objets dynamiques.

Avec les valeurs de profondeur des pixels pertinents obtenues via le système de vision monoscopique et avec les valeurs de disparité déterminées par le système stéréo, une première distance est alors calculée à l'aide de la formule suivante :

[Math 5] $D \left({p}_{i}\right) = d \left({p}_{i}\right) \times \frac{{D}_{tm} \left({p}_{i}\right)}{f}$

Avec :
- *D* est la première distance calculée pour un pixel pertinent *pᵢ ;*
- *d*(*pᵢ*) est la disparité obtenue via le système stéréo pour un pixel pertinent *pᵢ* ;
- *Dₜₘ*(*pᵢ*) est la profondeur calculée via le système de vision monoscopique pour un pixel pertinent *pᵢ* ; et
- f est la distance focale de la première caméra.

La distance de base appelée « baseline » est déterminée, dans une opération 37, comme étant la moyenne des premières distances calculées pour l'ensemble des pixels pertinents tels que définis précédemment.

L'obtention d'une matrice fondamentale lors de l'opération 31 ainsi que la détermination d'une distance de base représentative de la distance entre la première caméra 11 et la deuxième caméra 12 appelée « baseline » permet de définir l'ensemble des paramètres extrinsèques du système stéréo.

L'opération 38 d'étalonnage du système stéréo consiste à déterminer ces paramètres extrinsèques. Ce sont par exemple ceux de la matrice essentielle E du système stéréo définie par :

[Math 3] $E = {K}_{11}^{T} {FK}_{12}$

[Math 4] $E = \left⌊T\times \right⌋ R$

Avec :
- E est la matrice essentielle (en anglais « essential matrix ») ;
- $\left⌊T\times \right⌋$ est la matrice 3x3 antisymétrique (en anglais « skew symmetric ») associée au vecteur translation T entre la première caméra 11 et la deuxième caméra 12 ;
- R est la matrice 3x3 de rotation entre la première caméra 11 et la deuxième caméra 12 ;
- *K*₁₁ est la matrice 3x3 intrinsèque de la première caméra 11 ;
- *K*₁₂ est la matrice 3x3 intrinsèque de la deuxième caméra 12 ; et
- F la matrice fondamentale 3x3.

L'obtention des paramètres du vecteur translation T et de la matrice de rotation R peuvent ensuite être obtenus par une méthode de décomposition en valeur singulière (en anglais « singular value decomposition »).

Le calibrage du système stéréo est ainsi réalisé en fin de processus grâce aux opérations déterminant les paramètres extrinsèques du système stéréo. Les paramètres liant les deux caméras 11 et 12 sont ainsi parfaitement connus et une profondeur calculée par le système stéréo est alors métriquement précise.

Une donnée telle que la profondeur calculée par le système stéréo permet de connaître la profondeur de tout pixel de la première image. Le processus décrit ici permet ainsi d'obtenir des données de sortie fiables. Un ADAS recevant ce type de données va donc être en mesure d'assurer pleinement ses fonctions.

Si l'ADAS utilise des données du système stéréo comme données d'entrée pour déterminer la distance entre une partie du véhicule 10, par exemple le pare-chocs avant, et un autre usager présent sur la route, l'ADAS est alors en mesure de déterminer précisément cette distance. Par exemple, si l'ADAS a pour fonction d'agir sur un système de freinage du véhicule 10 en cas de risque de collision avec un autre usager de la route et que la distance séparant le véhicule 10 de ce même usager de la route diminue fortement, alors l'ADAS est en mesure de détecter ce rapprochement soudain et d'agir sur le système de freinage du véhicule 10 pour éviter un éventuel accident.

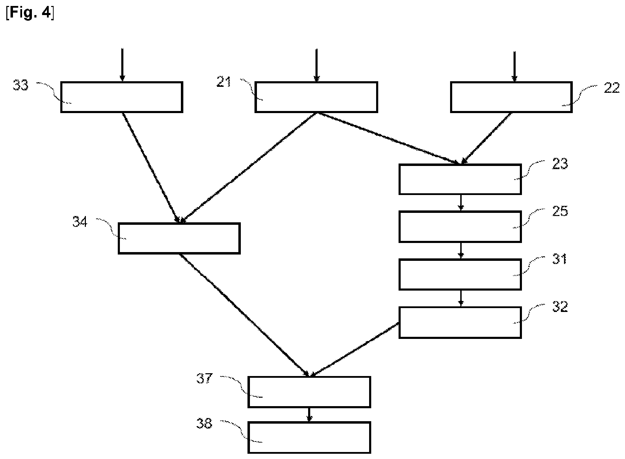

La figure 4 illustre un organigramme des différentes étapes d'un procédé d'étalonnage d'un système de vision stéréoscopique non parallèle embarqué dans le véhicule de la figure 1, selon un exemple de réalisation particulier et non limitatif de la présente invention. Le procédé est par exemple mis en œuvre par un dispositif embarqué dans le premier véhicule 10 ou par le dispositif 4 de la figure 2.

Dans une première étape 21, des premières données représentatives d'une première image acquise par une première caméra 11 dudit ensemble de caméras à un premier instant temporel d'acquisition t1 sont reçues.

Dans une deuxième étape 22, des deuxièmes données représentatives d'une deuxième image acquise par une deuxième caméra 12 dudit ensemble de caméras au même premier instant temporel d'acquisition t1 sont reçues.

Dans une étape 23, ensemble de pixels de la deuxième image correspondant à un premier ensemble de pixels de la première image est déterminé par mise en œuvre d'une méthode de calcul par flux optique en fonction du premier ensemble de pixels de la première image et une distance euclidienne associée à chaque pixel du premier ensemble de pixels de la première image est déterminée en fonction dudit flux optique obtenu pour chaque pixel.

Dans une étape 25, un premier groupe de huit paires de pixels est sélectionné dans les première et deuxième images, chaque paire de pixels étant composée d'un premier pixel du premier ensemble de pixels de la première image et d'un deuxième pixel de la deuxième image associé au premier pixel.

Dans une étape 31, une matrice fondamentale est déterminée en fonction du premier groupe par minimisation d'une erreur épipolaire.

Dans une étape 32, des disparités associées au premier ensemble de pixels de la première image sont déterminées en fonction de la matrice fondamentale et à partir de l'ensemble de pixels de la deuxième image et du premier ensemble de pixels de la première image.

Dans une étape 33, des troisièmes données représentatives d'une troisième image acquise par la première caméra 11 à un deuxième instant temporel d'acquisition t2 antérieur au premier instant temporel d'acquisition t1 de la première image sont reçues.

Dans une étape 34, des profondeurs associées à un deuxième ensemble de pixels de la première image sont calculées via un système de vision monoscopique à partir d'un ensemble de pixels de la troisième image correspondants au deuxième ensemble de pixels de la première image et du deuxième ensemble de pixels de la première image, le système de vision monoscopique étant formé de la première caméra 11.

Dans une étape 37, une distance de base entre ladite première caméra 11 et ladite deuxième caméra 12 est déterminée en fonction des profondeurs associées au deuxième ensemble de pixels de la première image, des distances euclidiennes associées à chaque pixel du premier ensemble de pixels de la première image et d'une distance focale associée à la première caméra 11.

Dans une étape 38, le système stéréo est étalonné en fonction de la matrice fondamentale et de la distance de base.

Selon une variante, les variantes et exemples des opérations décrits en relation avec les figures 1 et 3 s'appliquent aux étapes du procédé de la figure 4.

Bien entendu, la présente invention ne se limite pas aux exemples de réalisation décrits ci-avant mais s'étend à un procédé d'étalonnage d'un système de vision stéréoscopique embarqué dans un véhicule, qui inclurait des étapes secondaires sans pour cela sortir de la portée de la présente invention. Il en serait de même d'un dispositif configuré pour la mise en œuvre d'un tel procédé.

La présente invention concerne également un véhicule, par exemple automobile ou plus généralement un véhicule autonome à moteur terrestre, comprenant le dispositif 4 de la figure 2.

## Revendications

1. Procédé d'étalonnage d'un système de vision stéréoscopique embarqué dans un véhicule (10), le système de vision stéréoscopique comprenant un ensemble de caméras d'au moins deux caméras (11, 12) disposées de manière à acquérir chacune une image d'une scène selon un point de vue différent, les axes optiques représentatifs d'une orientation du champ de vision de chaque caméra étant orientés de façon non parallèle,
ledit procédé étant **caractérisé en ce qu'**il comprend les étapes suivantes :
- réception (21, 22) de premières et deuxièmes données respectivement représentatives d'une première et deuxième images acquises par respectivement une première et deuxième caméras (11, 12) dudit ensemble de caméras à un même premier instant temporel d'acquisition ;
- détermination (23) d'un ensemble de pixels de ladite deuxième image correspondant à un premier ensemble de pixels de la première image, par mise en œuvre d'une méthode de calcul par flux optique en fonction dudit premier ensemble de pixels de la première image et détermination d'une distance euclidienne associée à chaque pixel dudit premier ensemble de pixels de la première image en fonction dudit flux optique obtenu pour chaque pixel, un flux optique étant représentatif d'un vecteur de déplacement entre chaque pixel dudit premier ensemble de pixels de la première image et un pixel dudit ensemble de pixels de la deuxième image correspondant audit chaque pixel dudit premier ensemble de pixels de la première image ;
- sélection (25) d'un premier groupe de huit paires de pixels dans lesdites première et deuxième images, chaque paire de pixels étant composée d'un premier pixel dudit premier ensemble de pixels de la première image et d'un deuxième pixel de la deuxième image associé audit premier pixel ;
- détermination (31) d'une matrice fondamentale en fonction dudit premier groupe par minimisation d'une erreur épipolaire ;
- détermination (32) de disparités associées audit premier ensemble de pixels de la première image en fonction de ladite matrice fondamentale et à partir dudit ensemble de pixels de la deuxième image et dudit premier ensemble de pixels de la première image ;
- réception (33) de troisièmes données représentatives d'une troisième image acquise par ladite première caméra (11) à un deuxième instant temporel d'acquisition antérieur audit premier instant temporel d'acquisition de ladite première image ;
- calcul (34) de profondeurs associées à un deuxième ensemble de pixels de la première image via un système de vision monoscopique à partir d'un ensemble de pixels de la troisième image correspondants audit deuxième ensemble de pixels de la première image et dudit deuxième ensemble de pixels de la première image,
ledit système de vision monoscopique étant formé de ladite première caméra (11) ;
- détermination (37) d'une distance de base entre ladite première caméra (11) et ladite deuxième caméra (12) en fonction desdites profondeurs associées audit deuxième ensemble de pixels de la première image, desdites disparités associées à chaque pixel dudit premier ensemble de pixels de la première image et d'une distance focale associée à ladite première caméra (11) ; et
- étalonnage (38) dudit système de vision stéréoscopique en fonction de ladite matrice fondamentale et de ladite distance de base.

2. Procédé selon la revendication 1, pour lequel ladite première image étant découpée en huit blocs, chaque bloc comprenant au moins un premier pixel dudit premier groupe.

3. Procédé selon la revendication 1 ou 2, pour lequel lesdits premiers pixels dudit premier groupe sont sélectionnés dans ledit premier ensemble de pixels de la première image en fonction de ladite distance euclidienne associée à chaque premier pixel.

4. Procédé selon l'une des revendications 1 à 3, comprenant en outre les étapes de :
- détermination (26) d'une première matrice intermédiaire en fonction dudit premier groupe par minimisation d'une erreur épipolaire ;
- sélection (27) d'un deuxième groupe de huit paires de pixels distinct dudit premier groupe de huit paires de pixels;
- détermination (28) d'une deuxième matrice intermédiaire en fonction dudit deuxième groupe par minimisation d'une erreur épipolaire ;
- détermination (29) d'une première matrice moyenne en fonction d'un ensemble de matrices intermédiaires comprenant lesdites première et deuxième matrices intermédiaires, chaque coefficient de ladite première matrice moyenne étant défini comme une moyenne des coefficients de chaque matrice intermédiaire dudit ensemble de matrices intermédiaires, chacune desdites matrices intermédiaires ayant été ramenée préalablement à une matrice de norme égale à 1 ;
- comparaison (30) d'une valeur seuil déterminée à un ensemble de différences entre des coefficients de ladite première matrice moyenne et des coefficients de ladite première matrice intermédiaire ;
- si chaque différence est inférieure à ladite valeur seuil alors ladite matrice fondamentale est définie (31) comme étant égale à la première matrice moyenne ; et
- si au moins une différence est supérieure à ladite valeur seuil alors le procédé comprend les étapes suivantes, avec un ensemble de groupes comprenant lesdits premier et deuxième groupes :
A - sélection d'un nouveau groupe de huit paires de pixels distinct de chaque groupe dudit ensemble de groupes ;
B - détermination d'une nouvelle matrice intermédiaire en fonction dudit nouveau groupe par minimisation d'une erreur épipolaire ;
C - ajout de ladite nouvelle matrice intermédiaire audit ensemble de matrices intermédiaires ;
D - détermination d'une nouvelle matrice moyenne en fonction dudit ensemble de matrices intermédiaires, chaque coefficient de ladite première matrice moyenne étant défini comme une moyenne des coefficients de chaque matrice intermédiaire dudit ensemble de matrices intermédiaires, chacune desdites matrices intermédiaires ayant été ramenée préalablement à une matrice de norme égale à 1 ;
E - comparaison de ladite valeur seuil déterminée à un ensemble de différences entre des coefficients de ladite nouvelle matrice moyenne et des coefficients de ladite première matrice moyenne :
- si chaque différence est inférieure à ladite valeur seuil alors la matrice fondamentale est définie (30) comme ladite nouvelle matrice moyenne ; et
- si au moins une différence est supérieure à ladite valeur seuil alors ledit nouveau groupe de huit paires de pixels est ajouté dans l'ensemble de groupes et les étapes B à E sont réitérées en considérant ladite nouvelle matrice moyenne comme remplaçant ladite première matrice moyenne.

5. Procédé selon l'une des revendications 1 à 4, pour lequel lesdites profondeurs sont calculées par un réseau de neurones convolutif à apprentissage automatique.

6. Procédé selon l'une des revendications 1 à 5, comprenant en outre une étape de détermination (24) d'un premier masque de visibilité associé à ladite première image et représentatif d'un troisième ensemble de pixels de ladite première image ayant au moins un pixel correspondant dans ladite deuxième image, ledit premier masque de visibilité étant déterminé par la méthode de calcul par flux optique,
la sélection (25) dudit premier groupe étant en outre fonction dudit premier masque de visibilité.

7. Procédé selon l'une des revendications 1 à 6, comprenant en outre une étape de détermination (35) d'un deuxième masque de visibilité associé à ladite première image et représentatif d'un quatrième ensemble de pixels de ladite première image ayant au moins un pixel correspondant dans ladite troisième image, ledit deuxième masque de visibilité étant déterminé par la méthode de calcul par flux optique,
le calcul (37) de ladite distance de base étant en outre fonction dudit deuxième masque de visibilité.

8. Procédé selon l'une des revendications 1 à 7, comprenant en outre une étape de détermination (36) d'un masque d'objets dynamiques associé à ladite première image et représentatif d'un cinquième ensemble de pixels de ladite première image associé à au moins un objet en mouvement dans ladite scène, ledit masque d'objets dynamiques étant déterminé par la méthode de calcul par flux optique,
le calcul (37) de ladite distance de base étant en outre fonction dudit masque d'objets dynamiques.

9. Dispositif (4) d'étalonnage d'un système de vision stéréoscopique embarqué dans un véhicule (10), ledit dispositif (4) comprenant une mémoire (41) associée à au moins un processeur (40) configuré pour la mise en œuvre des étapes du procédé selon l'une quelconque des revendications 1 à 8.

10. Véhicule (10) comprenant le dispositif (4) selon la revendication 9.

## Patentansprüche

1. Verfahren zum Skalieren eines stereoskopischen Sichtsystems an Bord eines Fahrzeugs (10), wobei das stereoskopische Sichtsystem einen Satz von Kameras von mindestens zwei Kameras (11, 12) umfasst, die so angeordnet sind, dass sie jeweils ein Bild einer Szene gemäß einem unterschiedlichen Blickpunkt erfassen, wobei die optischen Achsen, die eine Orientierung des Sichtfeldes jeder Kamera darstellen, nicht parallel ausgerichtet sind, wobei das Verfahren **dadurch gekennzeichnet ist, dass** es die Schritte umfasst:
- Empfang (21, 22) von ersten bzw. zweiten Daten, die jeweils ein erstes bzw. zweites Bild darstellen, das von einer ersten bzw. zweiten Kamera (11, 12) des Satzes von Kameras zu einem gleichen ersten zeitlichen Zeitpunkt der Erfassung erfasst wird;
- Bestimmung (23) eines Satzes von Pixeln des zweiten Bildes, der einem ersten Satz von Pixeln des ersten Bildes des ersten Rechenverfahrens entspricht, durch Implementieren einer Verfahrensgruppe durch optischen Fluss als eine Funktion des ersten Satzes von Pixeln des ersten Bildes und Bestimmen eines euklidischen Abstands, der jedem Pixel des ersten Satzes von Pixeln des ersten Bildes zugeordnet ist, als eine Funktion des optischen Flusses, der für jedes Pixel erhalten wird, wobei ein optischer Fluss einen Verschiebungsvektor zwischen jedem Pixel des ersten Satzes von Pixeln des ersten Bildes und einem Pixel des Satzes von Pixeln des zweiten Bildes, der jedem Pixel des ersten Satzes von Pixeln des ersten Bildes entspricht, darstellt;
- Auswahl (25) einer ersten Gruppe von acht Pixelpaaren in dem ersten und dem zweiten Bild, jedes Paar von Pixeln Verbindung eines ersten Pixels des ersten Bildes und eines zweiten Pixels des zweiten Bildes, das dem ersten Pixel zugeordnet ist;
- Bestimmung (31) einer Grundmatrix als Funktion des ersten Empfangs durch Minimierung eines epipolaren Fehlers;
- Bestimmung (32) von Disparitäten, die dem ersten Satz von Pixeln der Grundmatrix-Pixel des zweiten Bildes und dem ersten Satz von Pixeln des ersten Bildes zugeordnet sind;
- Berechnung (33) dritter Daten, die ein drittes Bild darstellen, das von der ersten Kamera (11) zu einem zweiten Erfassungszeitpunkt vor dem ersten Erfassungszeitpunkt des ersten Bildes erfasst wird;
- Skalierung (34) von Tiefen, die einem zweiten Satz von Pixeln des ersten Bildes zugeordnet sind, über ein monoskopisches Sichtsystem aus einem Satz von Pixeln des dritten Bildes, der dem zweiten Satz von Pixeln des ersten Bildes und dem zweiten Satz von Pixeln des ersten Bildes entspricht,
- wobei das monoskopische Sichtsystem aus der ersten Kamera (11) gebildet ist; und mit einer Brennweite, die der ersten Kamera (11) zugeordnet ist; und
- Skalierung (38) des stereoskopischen Sehsystems in Abhängigkeit von der Grundmatrix und der Grundentfernung.

2. Verfahren nach Anspruch 1, wobei das erste Bild in acht Blöcke unterteilt ist, wobei jeder Block mindestens ein erstes Pixel der ersten Gruppe umfasst.

3. Verfahren nach Anspruch 1 oder 2, wobei die ersten Pixel der ersten Gruppe aus dem ersten Satz von Pixeln des ersten Bildes als Funktion der euklidischen Entfernung, die jedem ersten Pixel zugeordnet ist, ausgewählt werden.

4. Verfahren nach einem der Ansprüche 1 bis 3, das ferner die folgenden Schritte umfasst:
- Bestimmen (26) einer ersten Zwischenmatrix als Funktion der ersten Gruppe durch Minimieren eines epipolaren Fehlers;
- Auswählen (27) einer zweiten Gruppe von acht Pixelpaaren, die sich von der ersten Gruppe von acht Pixelpaaren unterscheiden;
- Bestimmen (28) einer zweiten Zwischenmatrix als Funktion der zweiten Gruppe durch Minimieren eines epipolaren Fehlers;
- Bestimmen (29) einer ersten Durchschnittsmatrix als Funktion eines Satzes von Zwischenmatrizen, die die erste und die zweite Zwischenmatrize umfassen, wobei jeder Koeffizient der ersten Durchschnittsmatrix als ein Durchschnitt der Koeffizienten jeder Zwischenmatrix des Satzes von Zwischenmatrizen definiert ist, von den Zwischenmatrizen, die zuvor auf eine Matrix von Standard gleich 1 reduziert worden sind;
- Vergleichen (30) eines bestimmten Schwellenwertes mit einem Satz von Differenzen zwischen den Koeffizienten der ersten mittleren Matrixkoeffizienten der ersten Zwischenmatrix;
- wenn jede Differenz kleiner als der Schwellenwert ist, dann wird die Grundmatrix als gleich der ersten mittleren Matrix definiert (31); und
- wenn mindestens eine Differenz größer als der Schwellenwert ist, dann umfasst das Verfahren die folgenden Schritte mit einem Satz von Gruppen, die die erste und die zweite Gruppe umfassen:
A- Auswahl einer neuen Gruppe von acht Pixelpaaren, die sich von jeder Gruppe des Satzes von Gruppen unterscheiden;
B- Bestimmung einer neuen Zwischenmatrix gemäß der neuen Gruppe durch Minimierung eines epipolaren Fehlers;
C- Hinzufügen der neuen Zwischenmatrix zu dem Satz von Zwischenmatrizen;
D- Bestimmung einer neuen mittleren Matrix als Funktion des Satzes von Zwischenmatrizen, wobei jeder Koeffizient der ersten mittleren Matrix als ein Durchschnitt der Koeffizienten jeder Zwischenmatrix des Satzes von Zwischenmatrizen definiert ist, wobei jede der Zwischenmatrizen zuvor auf eine Matrix von Standard gleich 1 reduziert wurde;
E- Vergleich des ermittelten Schwellenwertes mit einem Satz von Differenzen zwischen Koeffizienten der neuen Mittelwertmatrix und Koeffizienten der ersten Mittelwertmatrix:
- wenn jede Differenz kleiner als der Schwellenwert ist, wird die Grundmatrix als die neue Mittelwertmatrix definiert (30); und
- ist mindestens eine Differenz größer als der Schwellwert, so wird die neue Gruppe von acht Pixelpaaren zu der Gruppe von Gruppen addiert, und die Schritte B bis E werden wiederholt, indem die neue mittlere Matrix als Ersatz der ersten mittleren Matrix betrachtet wird.

5. Verfahren nach einem der vorhergehenden Ansprüche, bei dem die Tiefen durch ein maschinell lernendes Faltungsneuronennetz berechnet werden.

6. Verfahren nach einem der Ansprüche 1 bis 5, ferner mit einem Schritt des Bestimmens (24) einer ersten Sichtbarkeitsmaske, die dem ersten Bild zugeordnet ist und einen dritten Satz von Pixeln des ersten Bildes darstellt, der mindestens ein entsprechendes Pixel in dem zweiten Bild aufweist, wobei die erste Sichtbarkeitsmaske durch das optische Flussberechnungsverfahren bestimmt wird,
wobei die Auswahl (25) der ersten Gruppe auch eine Funktion der ersten Sichtbarkeitsmaske ist.

7. Verfahren nach einem der Ansprüche 1 bis 6, ferner mit einem Schritt des Bestimmens (35) einer zweiten Sichtbarkeitsmaske, die dem ersten Bild zugeordnet ist und einen vierten Satz von Pixeln des ersten Bildes darstellt, der mindestens ein entsprechendes Pixel in dem dritten Bild aufweist, wobei die zweite Sichtbarkeitsmaske durch das optische Flussberechnungsverfahren bestimmt wird,
wobei die Berechnung (37) der Basisentfernung auch eine Funktion der zweiten Sichtbarkeitsmaske ist.

8. Verfahren nach einem der Ansprüche 1 bis 7, ferner mit einem Schritt des Bestimmens (36) einer dynamischen Objektmaske, die dem ersten Bild zugeordnet ist und einen fünften Satz von Pixeln des ersten Bildes repräsentiert, die mindestens einem sich bewegenden Objekt in der Szene zugeordnet ist, wobei die dynamische Objektmaske durch das optische Flussberechnungsverfahren bestimmt wird,
wobei der Rechner (37) der Basisentfernung auch eine Funktion der dynamischen Objektmaske ist.

9. Vorrichtung (4) zum Skalieren eines stereoskopischen Sichtsystems an Bord eines Fahrzeugs (10), wobei die Vorrichtung (4) einen Speicher (41) umfasst, der mit mindestens einem Prozessor (40) verbunden ist, der zum Implementieren der Schritte des Verfahrens nach einem der Ansprüche 1 bis 8 konfiguriert ist.

10. Fahrzeug (10) mit der Vorrichtung (4) nach Anspruch 9.

## Claims

1. Method for scaling a stereoscopic vision system on board a vehicle (10), the stereoscopic vision system comprising a set of cameras of at least two cameras (11, 12) arranged so as to each acquire an image of a scene according to a different viewpoint, the optical axes representative of an orientation of the field of view of each camera being orientated in a non-parallel manner,
said method being **characterised in that** it comprises the steps of:
- receipt (21, 22) of first and second data respectively representative of a first and second images acquired by respectively a first and second cameras (11, 12) of said set of cameras at a same first temporal instant of acquisition;
- determination (23) of a set of pixels of said second image corresponding to a first set of pixels of the first image of the first compute method, by implementing a method group by optical flow as a function of said first set of pixels of the first image and determination of an Euclidean distance associated with each pixel of said first set of pixels of the first image as a function of said optical flow obtained for each pixel, an optical flow being representative of a displacement vector between each pixel of said first set of pixels of the first image and a pixel of said set of pixels of the second image corresponding to said each pixel of said first set of pixels of the first image;
- selection (25) of a first group of eight pairs of pixels in said first and second images, each pair of pixels being compound of a first pixel of said first image and of a second pixel of the second image associated with said first pixel;
- determination (31) of a fundamental matrix as a function of said first receipt by minimising an epipolar error;
- determination (32) of disparities associated with said first set of pixels of said fundamental matrix pixels of the second image and of said first set of pixels of the first image;
- compute (33) of third data representative of a third image acquired by said first camera (11) at a second acquisition time instant prior to said first acquisition time instant of said first image;
- scaling (34) of depths associated with a second set of pixels of the first image via a monoscopic vision system from a set of pixels of the third image corresponding to said second set of pixels of the first image and said second set of pixels of the first image,
- said monoscopic vision system being formed of said first camera (11); and of a focal length associated with said first camera (11); and
- scaling (38) of said stereoscopic vision system as a function of said fundamental matrix and of said basic distance.

2. Method according to claim 1, wherein said first image is divided into eight blocks, each block comprising at least one first pixel of said first group.

3. Method according to claim 1 or 2, wherein said first pixels of said first group are selected from said first set of pixels of the first image as a function of said Euclidean distance associated with each first pixel.

4. Method according to one of claims 1 to 3, further comprising the steps of:
- determining (26) a first intermediate matrix as a function of said first group by minimising an epipolar error;
- selecting (27) a second group of eight pairs of pixels distinct from said first group of eight pairs of pixels;
- determining (28) a second intermediate matrix as a function of said second group by minimising an epipolar error;
- determining (29) a first average matrix as a function of a set of intermediate matrices comprising said first and second intermediate matrices, each coefficient of said first average matrix being defined as an average of the coefficients of each intermediate matrix of said set of intermediate matrices, each of said intermediate matrices having been previously reduced to a matrix of standard equal to 1;
- comparing (30) a determined threshold value to a set of differences between the coefficients of said first average matrix coefficients of said first intermediate matrix;
- if each difference is less than said threshold value, then said fundamental matrix is defined (31) as being equal to the first average matrix; and
- if at least one difference is greater than said threshold value, then the method comprises the following steps, with a set of groups comprising said first and second groups:
A- Selection of a new group of eight pairs of pixels distinct from each group of said set of groups;
B- Determination of a new intermediate matrix according to said new group by minimising an epipolar error;
C- Addition of said new intermediate matrix to said set of intermediate matrices;
D- Determination of a new mean matrix as a function of said set of intermediate matrices, each coefficient of said first mean matrix being defined as an average of the coefficients of each intermediate matrix of said set of intermediate matrices, each of said intermediate matrices having been previously reduced to a matrix of standard equal to 1;
E- Comparison of said determined threshold value with a set of differences between coefficients of said new mean matrix and coefficients of said first mean matrix:
- if each difference is less than said threshold value then the fundamental matrix is defined (30) as said new mean matrix; and
- if at least one difference is greater than said threshold value, then said new group of eight pairs of pixels is added to the set of groups and steps B to E are reiterated by considering said new mean matrix as replacing said first mean matrix.

5. Method according to one of cor which said depths are calculated by a convolutional machine-learning neurone network.

6. Method according to one of claims 1 to 5, further comprising a step of determining (24) a first visibility mask associated with said first image and representative of a third set of pixels of said first image having at least one corresponding pixel in said second image, said first visibility mask being determined by the optical flow compute method,
the selection (25) of said first group also being a function of said first visibility mask.

7. Method according to one of claims 1 to 6, further comprising a step of determining (35) a second visibility mask associated with said first image and representative of a fourth set of pixels of said first image having at least one corresponding pixel in said third image, said second visibility mask being determined by the optical flow compute method,
the compute (37) of said basic distance also being a function of said second visibility mask.

8. Method according to one of claims 1 to 7, further comprising a step of determining (36) a dynamic object mask associated with said first image and representative of a fifth set of pixels of said first image associated with at least one moving object in said scene, said dynamic object mask being determined by the optical flow compute method,
the compute (37) of said basic distance also being a function of said dynamic object mask.

9. Device (4) for scaling a stereoscopic vision system on board a vehicle (10), said device (4) comprising a memory (41) associated with at least one processor (40) configured for implementing the steps of the method according to any one of claims 1 to 8.

10. Vehicle (10) comprising the device (4) according to claim 9.
